**Europäisches Patentamt**

**European Patent Office**

**Office européen des brevets**

(19)

(11) Veröffentlichungsnummer: **0 048 334**
**B1**

(12) **EUROPÄISCHE PATENTSCHRIFT**

(45) Veröffentlichungstag der Patentschrift:
07.03.84

(21) Anmeldenummer: 81106154.8

(22) Anmeldetag: 06.08.81

(51) Int. Cl.³: **B 65 G 49/06**, B 07 C 5/04,
B 65 G 1/04

(54) Vorrichtung zum Sortieren von unsortierten Glasscheiben einer Glasschneideanlage.

(30) Priorität: 24.09.80 CH 7135/80

(43) Veröffentlichungstag der Anmeldung:
31.03.82 Patentblatt 82/13

(45) Bekanntmachung des Hinweises auf die Patenterteilung:
07.03.84 Patentblatt 84/10

(84) Benannte Vertragsstaaten:
BE CH DE FR GB IT LI NL SE

(56) Entgegenhaltungen:
DE - A - 2 539 352
FR - A - 2 417 463
US - A - 2 902 168
US - A - 3 698 577

(73) Patentinhaber: **Bystronic Maschinen AG,
Industriestrasse 3, CH-4922 Bützberg (CH)**

(72) Erfinder: **Zumstein, Ernst, Rainstrasse 25,
CH-4922 Bützberg (CH)**
Erfinder: **Fiechter, Roy, Stelliweg 20,
CH-3360 Herzogenbuchsee (CH)**

(74) Vertreter: **Schmauder, Klaus Dieter et al, c/o Schmauder
& Wann Patentanwaltsbüro Nidelbadstrasse 75,
CH-8038 Zürich (CH)**

ACTORUM AG

Vorrichtung zum Sortieren von unsortierten Glasscheiben einer Glasschneideanlage

Die Erfindung betrifft eine Vorrichtung gemäss Oberbegriff des Anspruches 1.

Eine Vorrichtung der eingangs genannten Art ist bekannt und wird von der Alcomag B.V. in Den Haag unter der Bezeichnung «Selectronic» hergestellt und vertrieben. Bei einer solchen Vorrichtung ist der Verschiebewagen direkt an der Glasschneideanlage angeschlossen und dient jeweils zur Aufnahme einer einzelnen Glasscheibe. Nachteilig dabei ist es, dass der Verschiebewagen jeweils für eine einzelne Glasscheibe längs des Fächergestells verfahren muss, um die Glasscheibe in einem Fach des Fächergestells abzustellen. Durch diese sehr grossen Wege ist die Vorrichtung sehr langsam, benötigt viel Energie und ist hohem Verschleiss ausgesetzt und wird dennoch der Leistung einer modernen Glasschneideanlage nicht gerecht. Aus diesem Grunde werden in der Regel auch zwei solche Anlagen beidseits der Abgabestation einer Glasschneideanlage angeordnet. Dadurch wird der Aufwand einer solchen Anlage weiter erhöht.

Aufgabe der Erfindung ist es, eine Vorrichtung der eingangs genannten Art so auszubilden, dass sie die erwähnten Nachteile nicht aufweist, sondern bei einfachem Aufbau und geringen Energiekosten eine hohe Leistung erbringt.

Diese Aufgabe wird durch die kennzeichnenden Merkmale des Anspruches 1 gelöst.

Durch den Fächerwagen ist es möglich, fortlaufend unsortierte Glasscheiben einer Glasschneideanlage aufzunehmen, wobei ein solcher Fächerwagen der Kapazität einer Glasschneideanlage ohne weiteres gerecht werden kann. Dieser Fächerwagen wird dann auf dem Verschiebewagen abgestellt und mit diesem verfahren, so dass der Verschiebewagen nicht für jede einzelne Glasscheibe von der Aufnahmeposition verfahren muss, sondern ein Paket von Glasscheiben gleichzeitig verarbeiten kann. Dadurch erhöht sich einerseits die Leistung der Sortiervorrichtung und andererseits ergibt sich ein geringerer Energieverbrauch und eine höhere Lebensdauer. Es können auch mehrere Fächerwagen vorgesehen werden, die fortlaufend mit unsortierten Glasscheiben gefüllt werden und die eine Pufferfunktion erfüllen können, wenn der Anfall an unsortierten Glasscheiben an einer Glasschneideanlage unregelmässig ist, weil sich beispielsweise Chargen mit kleinen Glasscheiben mit solchen grosser Glasscheiben abwechseln.

Vorteilhafte Ausbildungen der erfindungsgemässen Sortiervorrichtung sind in den Ansprüchen 2 bis 9 umschrieben.

Gemäss Anspruch 2 kann der Verschiebewagen mit einer Verschiebebrücke ausgerüstet sein, die es ermöglicht, dem Fächerwagen eine aus der Bewegung des Verschiebewagens und der Bewegung der Verschiebebrücke überlagerte Bewegung zu erteilen. Dadurch lässt sich die Wegstrecke des Verschiebewagens weiter verringern, da kleine Differenzen im Verschiebeweg durch die Verschiebebrücke ausgeglichen werden können.

Dies ergibt eine weitere Steigerung der Leistung der Sortiervorrichtung bei gleichzeitiger Schonung der Bauteile.

Die Übergabevorrichtung kann beispielsweise darin bestehen, dass der Fächerwagen in jedem Fach individuell antreibbare Bodenrollen aufweist, die von Fach zu Fach einzeln einschaltbar sind. Eine Vereinfachung der Übergabevorrichtung ergibt sich bei der Ausbildung nach Anspruch 3, da hier nur eine Übergabevorrichtung für sämtliche Fächer des Fächergestells notwendig ist.

Besonders vorteilhaft ist eine Ausgestaltung der Sortiervorrichtung nach Anspruch 4, da die Übergabevorrichtung eine geringere Masse aufweist als der Fächerwagen, so dass die Übergabevorrichtung schneller und mit weniger Energieaufwand betrieben werden kann. Dadurch wird eine weitere Leistungssteigerung bei Verringerung des Energiebedarfes erzielt. Eine besonders einfache Ausbildung der Übergabevorrichtung ist in Anspruch 5 definiert, die sich durch die Ausgestaltung nach Anspruch 6 weiter verbessern lässt.

Eine besonders einfache Steuerung der Sortiervorrichtung ergibt sich bei einer Ausbildung nach Anspruch 7. Die Impulszähler können dann direkt zur Auswertung der Wegstrecke dienen, wodurch sich eine grosse Variabilität ergibt und auf Endschalter weitgehend verzichtet werden kann.

Eine sehr präzise Steuerung der Sortiervorrichtung ist durch eine Ausgestaltung nach Anspruch 8 möglich.

Die Sortiervorrichtung kann beispielsweise dadurch gesteuert werden, dass die einzelnen zu sortierenden Glasscheiben mit Code-Markierungen versehen werden, die von der Sortiervorrichtung gelesen und verarbeitet werden. Besonders vorteilhaft ist jedoch eine Ausgestaltung nach Anspruch 9, da hier die vorgeschaltete Glasschneideanlage direkt zur Steuerung der Sortiervorrichtung verwendet werden kann. Durch den Schneidplan ist genau festgelegt, welche Glasscheiben an der Abgabestation ankommen, so dass diese Information zur Steuerung der Sortiervorrichtung verwendet werden kann.

Ausführungsbeispiele des Gegenstands der Erfindung werden nachfolgend anhand schematischer Zeichnungen näher beschrieben, dabei zeigen:

Fig. 1 eine Glastafel mit einem Schneidplan im Grundriss;

Fig. 2 eine Glasschneideanlage mit Fächerwagen im Grundriss;

Fig. 3 eine Sortiervorrichtung im Grundriss;

Fig. 4 die Übergabevorrichtung der Sortiervorrichtung in Ansicht IV–IV der Fig. 3;

Fig. 5 die Übergabevorrichtung der Fig. 4 im Schnitt V–V der Fig. 4;

Fig. 6 die Übergabevorrichtung der Fig. 4 in Ansicht VI–VI der Fig. 4;

Fig. 7 eine weitere Sortiervorrichtung im Grundriss.

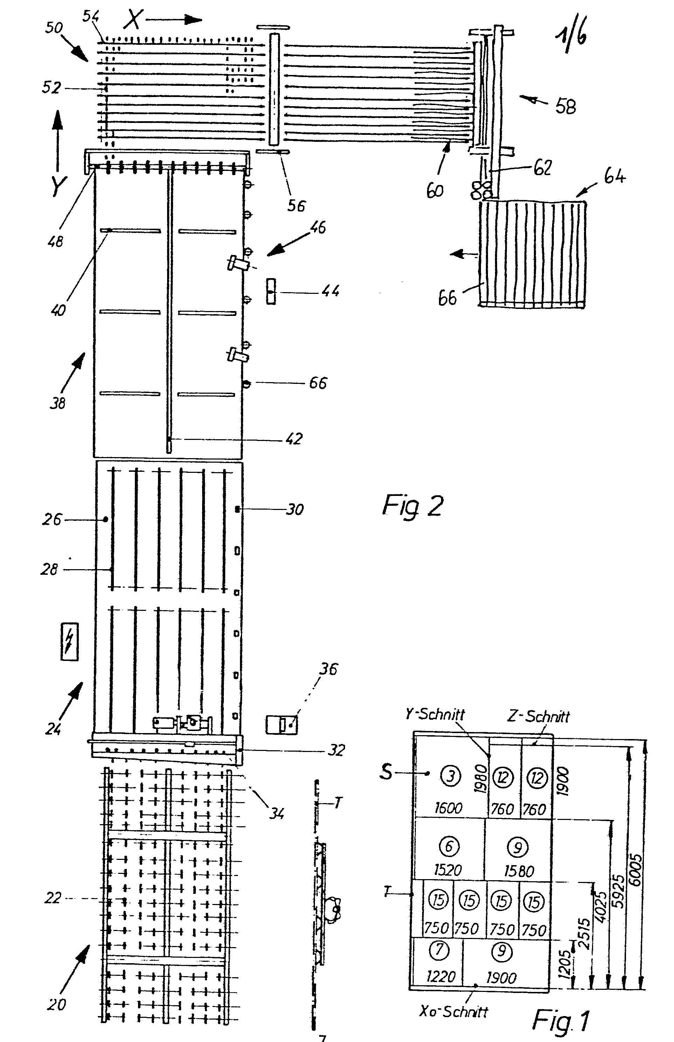

Die Figur 1 zeigt eine Glastafel T, die gemäss einem Schneidplan in einzelne Glasscheiben S unterteilt werden soll. Dieser Schneidplan wird von einem elektronischen Rechensteuergerät einer Schneidmaschine erstellt. In dieses elektronische Rechensteuergerät werden die Daten mehrerer Aufträge und die Masse der zu verarbeitenden Glastafeln eingegeben. Das elektronische Rechensteuergerät ermittelt dann aus diesen Daten den optimalen Schneidplan mit dem geringsten Verschnitt. Dabei werden allerdings die einzelnen zu schneidenden Glasscheiben S verschiedener Aufträge gemischt. Der dargestellte Schneidplan enthält beispielsweise Glasplatten der Aufträge 3, 6, 7, 9, 12 und 15. Der Schneidplan setzt sich zusammen aus X-Schnitten, die von Rand zu Rand der Glastafel durchgehen und Y-Schnitten, die von X-Schnitt zu X-Schnitt durchgehen. Gegebenenfalls kann der Schneidplan zusätzliche Z-Schnitte aufweisen, die von Y-Schnitt zu Y-Schnitt verlaufen. Beim gezeigten Beispiel bildet der $X_0$-Schnitt den Bezugsschnitt, von dem die einzelnen Masse abgetragen werden. Ferner bildet der rechte Rand der Glastafel die Bezugsbasis für die Y-Schnitte.

Die Fig. 2 zeigt eine Anlage zum Schneiden von Glastafeln T, die einen Kipptisch 20 aufweist, der zum Aufnehmen einer Glastafel T in annähernd vertikale Stellung gekippt werden kann. Die Glastafel T wird aufgelegt und der Kipptisch schwenkt in seine horizontale Lage zurück. Der Kipptisch enthält einen Rollenboden 22, auf dem die Glastafel zur Schneidmaschine 24 gefördert wird. Diese ist vorzugsweise entsprechend der DE-C-2 160 545 aufgebaut, wobei ein Luftkissentisch 26 mit Förderriemchen 28 zum Transport der Glastafel dient. Diese wird an Anschlägen 30 ausgerichtet. Ein längs des Luftkissentisches 26 verfahrbarer Schneidwagen 32 mit setzbaren Schneidwerkzeugen 34 dient zum Schneiden der Glastafel. Zur Programmierung der Schneidmaschine 24 dient ein elektronisches Rechensteuergerät 36. An die Schneidmaschine 24 schliesst sich ein Zwischenförderer 38 an, der gegebenenfalls als Brechtisch ausgebildet sein kann und hierzu in X-Richtung und in Y-Richtung verlaufende Brechleisten 40 und 42 aufweist, die an einem Steuerpult 44 einzeln betätigt werden können. Der Zwischenförderer enthält gleichzeitig eine Ausrichtvorrichtung 46, zum Ausrichten der geschnittenen Glastafeln in Y-Richtung. An den Zwischenförderer schliesst sich eine erste Brechmaschine 48 an, die als statische Brechmaschine ausgebildet ist und zum aufeinanderfolgenden Aufbrechen der über die ganze Glastafel durchgehenden X-Schnitte dient. Die einzelnen Glastafelabschnitte gelangen auf einen Umlenktisch 50 mit einem in Y-Richtung wirksamen Rollenbogen 52 und einem in X-Richtung wirksamen Riemchenboden 54, die abwechselnd zum Einsatz kommen. An den Umlenktisch 50 schliesst sich in X-Richtung eine zweite Brechmaschine 56 an, die als dynamische Brechmaschine ausgebildet ist und zum aufeinanderfolgenden Aufbrechen der von X-Schnitt zu X-Schnitt durchgehenden Y-Schnitte dient. Die einzelnen Glasscheiben S gelangen nun zur Abgabestation 58, an der mittels einer Aufstellvorrichtung 60 vertikal gestellt werden. Über eine Fördervorrichtung 62 gelangen die Glasscheiben stehend an einen Fächerwagen 64, in dem sie nacheinander einzeln in Fächer 66 abgestellt werden.

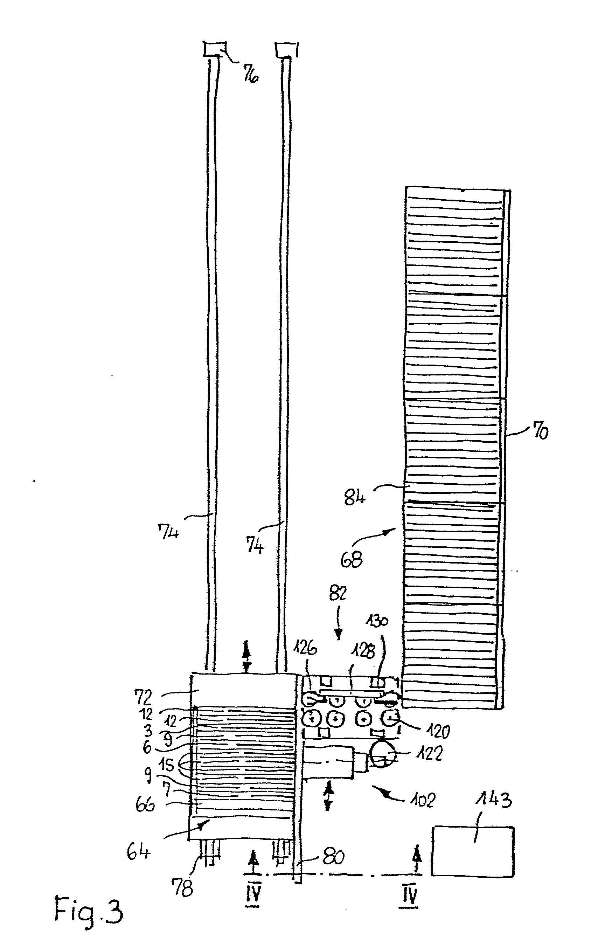

Sobald ein solcher Fächerwagen 64 gefüllt ist, wird ein neuer Fächerwagen an der Abgabestation 58 angeschlossen und der gefüllte Fächerwagen gelangt zur Sortiervorrichtung gemäss Fig. 3. Die Sortiervorrichtung enthält ein Fächergestell 68, das beispielsweise ebenfalls aus Fächerwagen 70 gebildet ist. Im vorliegenden Beispiel besteht das Fächergestell 68 aus fünf solchen Fächerwagen 70. Längs dieses Fächergestelles 68 ist ein Verschiebewagen 72 auf Schienen 74 zwischen Puffern 76 und 78 verfahrbar. Der Verschiebewagen 72 enthält einen nicht näher dargestellten Antrieb, der vorzugsweise einen Scheibenläufermotor und einen Geber enthält. An der dem Fächergestell 68 zugewandten Seite des Verschiebewagens 72 ist eine Führungsschiene 80 angeordnet, an der eine Übergabevorrichtung 82 längs des Verschiebewagens 72 verfahrbar ist. Der Verschiebewagen 72 trägt einen mit Glasscheiben gefüllten Fächerwagen 64. Die Übergabevorrichtung 82 wirkt mit jedem Fach 66 des Fächerwagens 64 zusammen, wie nachfolgend noch näher erläutert wird. Die Übergabevorrichtung 82 dient zum Herausnehmen einer Glasscheibe aus einem Fach 66 des Fächerwagens 64 und Absetzen der Glasscheibe in einem Fach 84 des Fächergestells 68.

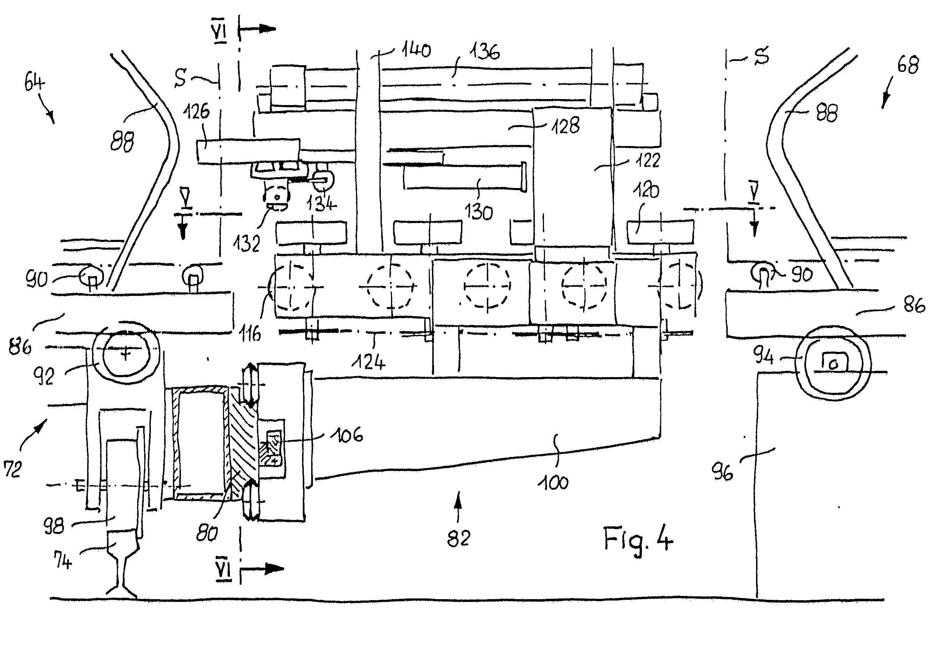

Wie insbesondere in Fig. 4 angedeutet ist, bestehen der Fächerwagen 64 und das Fächergestell 68 aus einem Rahmen 86, an dem aus Rohren gebildete Bügel 88 angeordnet sind, die zwischen sich die Fächer 66 bzw. 84 bilden. Auf der Unterseite der Fächer stützen sich die Glasscheiben S auf Rollen 90 ab. Die Rahmen 86 des Förderwagens 67 bzw. des Fächergestells 68 ruhen auf Rollen 92 des Verschiebewagens 72 bzw. auf Rollen 94 eines Gestells 96, welches das Fächergestell 68 trägt. Wie insbesondere aus Fig. 4 hervorgeht, enthält der Verschiebewagen 72 Laufrollen 98, die auf den Schienen 74 abrollen.

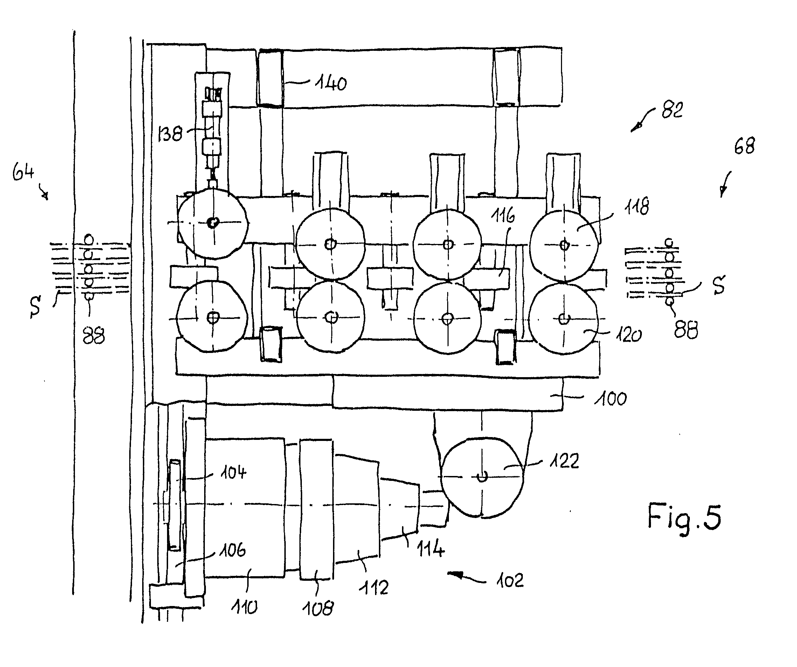

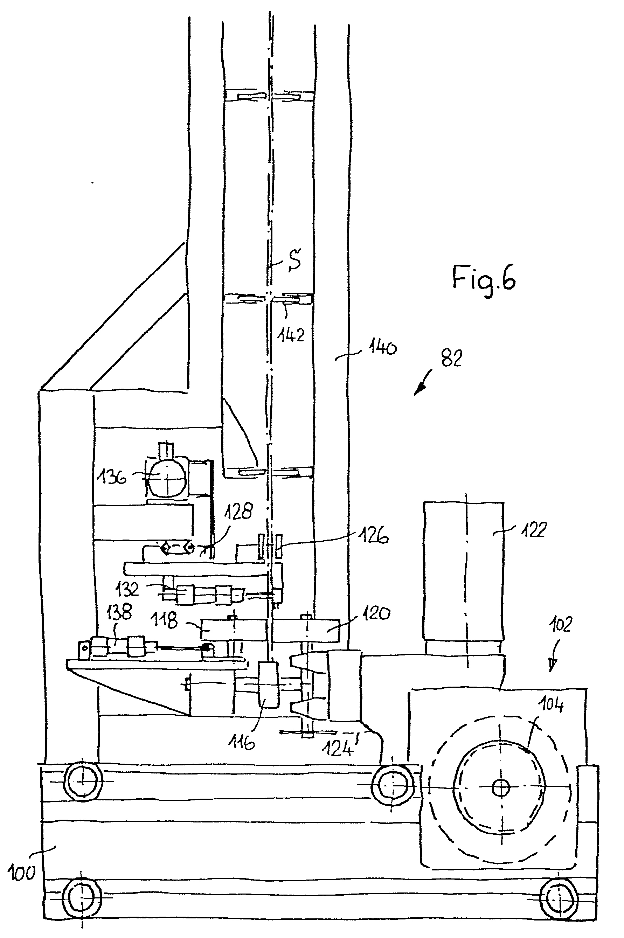

Die insbesondere in den Fig. 4 bis 6 dargestellte Übergabevorrichtung 82 läuft auf Führungsschienen 80 des Verschiebewagens 72. Hierzu weist ein Gestell 100 Rollen auf, die mit den Führungsschienen 80 zusammenwirken, sowie eine Antriebsvorrichtung 102, die mittels eines Stirnrades 104 mit einer Zahnstange 106 an der Führungsschiene 80 kämmt. Die Antriebsvorrichtung enthält einen Scheibenläufermotor 108, der über ein Getriebe 110 mit dem Stirnrad 104 verbunden ist. Weiter enthält die Antriebsvorrichtung eine Bremse 112 und einen Impulsgeber 114. Zur Aufnahme und zur Übergabe der Glasscheiben S sind am Gestell 100 frei drehbare untere Stützrollen 116 vorhanden sowie seitliche Führungsrollen 118 und Treibrollen 120. Letztere werden von einem Motor 122 mittels eines Kettentriebes 124 angetrieben. Die Übergabevorrichtung 82 enthält ferner eine Zange 126, die an einem Halter 128 angeordnet ist, an dem auch ein Stössel 130 befestigt ist. Ein Kolben-/Zylinder-Aggregat 132 dient dazu, den Halter 128 mit der Zange 126 und dem Stössel 130 in den Verfahrweg einer Glasscheibe S zu bewegen. Ein weiteres Kolben-/Zylinder-Aggregat 134 dient zum Öffnen und Schliessen der Zange 126. Der Halter 128 wird mittels eines weiteren Kolben-/Zylinder-Aggregates 136 in Richtung der Fächer 66 und 84 hin- und herbewegt. Zur Übergabe einer Glasscheibe S aus dem Fächerwagen 64 in das Fächergestell 68 wird, sobald der Verschiebewagen 72 und die Übergabevorrichtung in der richtigen Lage stehen, der Halter 128 mit dem Kolben-/Zylinder-Aggregat 132 in den Verschiebeweg der Glasscheibe S gebracht, und mittels des Kolben-/Zylinder-Aggregates 136 in das Fach 66 des Fächerwagens 64 eingefahren. Mittels des Kolben-/Zylinder-Aggregates 134 wird die Zange 126 geschlossen und letztere hält die Glasscheibe fest. Durch Betätigung des Kolben-/Zylinder-Aggregates 136 wird die Glasscheibe S aus dem Fach des Fächerwagens herausgezogen, bis sie in den Eingriffsbereich der Führungsrollen 118 bzw. Treibrollen 120 gelangt. Die Zange 126 wird geöffnet, ausgefahren und zurückgenommen. Daraufhin wird die vorderste Führungsrolle 118 mittels eines Kolben-/Zylinder-Aggregates 138 gegen die Treibrollen 120 gepresst, so dass die Glasscheibe S von diesen mitgenommen wird. Nach Verlassen der Übergabevorrichtung 82 wird der Stössel 130 eingefahren und mittels des Kolben-/Zylinder-Aggregates 136 bewegt, so dass die Glasscheibe vollständig in ein entsprechendes Fach 84 des Fächergestells 68 eingeschoben wird.

Das Gestell 100 der Übergabevorrichtung 82 weist vertikal verlaufende Stützen 140 auf, die Stützrollen 142 tragen, um die Glasscheibe S zu halten und zu führen.

Wenn von einem Schneidplan gemäss Fig. 1 ausgegangen wird, so kommen die einzelnen Glasscheiben in folgender Reihe an: 12, 12, 3, 9, 6, 15, 15, 15, 15, 9 und 7. Mit Hilfe des Verschiebewagens 72 und der Übergabevorrichtung 82 müssen nun diese Glasscheiben derart im Fächergestell 68 verteilt werden, dass sie in fortlaufender Reihenfolge vorhanden sind.

Zur Steuerung der Sortiervorrichtung dient eine Steuervorrichtung 143, die nicht im einzelnen dargestellt ist. Der Sortiervorgang kann beispielsweise dadurch gesteuert werden, dass die einzelnen zu sortierenden Glasscheiben mit Code-Markierungen versehen werden, die von der Übergabevorrichtung gelesen und verarbeitet werden. Besonders vorteilhaft ist es jedoch, wenn die Steuervorrichtung mit dem Rechensteuergerät 36 der Glasschneideanlage gekoppelt ist, um die Sortiervorrichtung entsprechend dem Schneidplan der Glasschneideanlage zu steuern. Durch den Schneidplan ist genau festgelegt, welche Glasscheibe an der Abgabestation 58 ankommt und somit an den Fächerwagen abgegeben wird. Diese Information kann in der Steuervorrichtung 143 in bekannter Weise verarbeitet werden und den Verschiebewagen 72 sowie die Übergabevorrichtung 82 steuern.

Die weitere Steuerung des Verschiebewagens und der Übergabevorrichtung 82 kann in üblicher Weise z.B. durch Endschalter in Form von mechanischen, elektrischen, elektrooptischen Schaltern usw. geschehen. Eine besonders einfache Steuerung der Sortiervorrichtung ergibt sich, wenn mindestens eine, vorzugsweise alle der folgenden Baueinheiten: Verschiebewagen 72, Antriebe der Übergabevorrichtung 82 Impulsgeber 114 aufweisen, die mit der Steuervorrichtung gekoppelt sind. Die Impulszähler können dann direkt zur Auswertung der Wegstrecke dienen, wodurch sich eine grosse Variabilität ergibt und auf Endschalter weitgehend verzichtet werden kann.

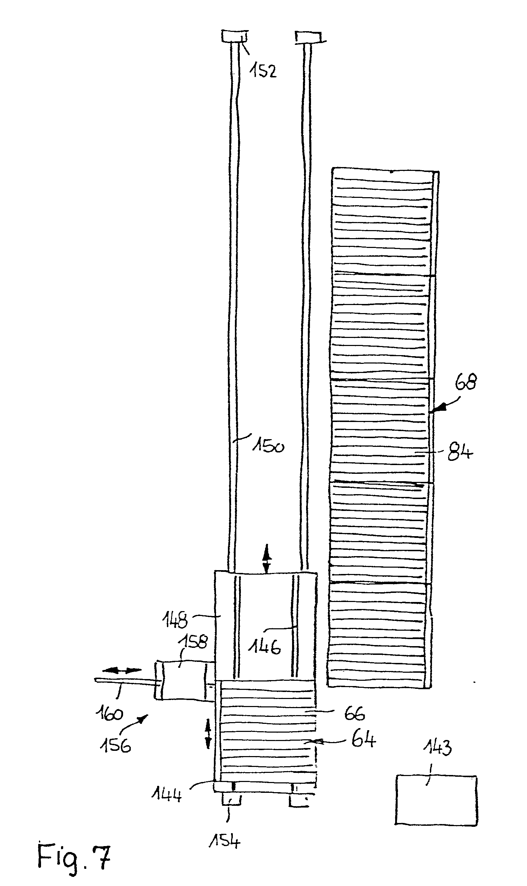

Die Fig. 7 zeigt ein weiteres Ausführungsbeispiel einer Sortiervorrichtung, bei der der Fächerwagen 64 auf einer Verschiebebrücke 144 angeordnet ist, die auf Schienen 146 des Verschiebewagens 148 verfahrbar ist, wobei die Länge des Verschiebeweges mindestens der Länge des Fächerwagens 64 entspricht. Der Verschiebewagen 148 ist seinerseits auf Schienen 150 zwischen Puffern 152 und 154 längs des Fächergestells 68 verfahrbar. Die Übergabevorrichtung 156 ist fest am Verschiebewagen 148 angebracht und enthält eine Ausstossvorrichtung 158, mit einem Stössel 160, der einzelne Glasscheiben S aus dem Fächerwagen 64 in das Fächergestell 68 überführt. Die Übergabevorrichtung 156 ist auf der Seite des Verschiebewagens 148 angebracht, die dem Fächergestell 68 abgewandt ist.

## Patentansprüche

1. Vorrichtung zum Sortieren von unsortierten Glasscheiben einer Glasschneideanlage, mit einem Fächergestell (68), welches senkrechte Fächer (66) zur sortierten Aufnahme jeweils einer Glasscheibe (S) aufweist, ferner mit einem längs des Fächergestells (68) verfahrbaren Verschiebewagen (72, 148) mit einer Übergabevorrichtung (82, 156) zur Übergabe der Glasscheibe nur in der Ebene dieser Glasscheibe (S) an ein Fach (66) des Fächergestells (68) sowie mit einer Steuervorrichtung (143), um jede Glasscheibe (S) einem bestimmten Fach (84) des Fächergestells (68) zuzuordnen, dadurch gekennzeichnet, dass sie mindestens einen Fächerwagen (64) mit senkrechten Fächern (66) zur fortlaufenden Aufnahme der unsortierten Glasscheiben (S) aufweist, der auf dem Verschiebewagen (72, 148) abstellbar ist, wobei die Steuervorrichtung so ausgebildet ist, dass sie jede Glasscheibe (S) des Fächerwagens (64) einem bestimmten Fach (84) des Fächergestells (68) zuordnet.

2. Vorrichtung nach Anspruch 1, dadurch gekennzeichnet, dass der Verschiebewagen (148) eine Verschiebebrücke (144) zur Aufnahme des Fächerwagens (64) aufweist, wobei die Verschiebebrücke (144) um die Länge des Fächerwagens (64) auf dem Verschiebewagen (148) verfahrbar ist.

3. Vorrichtung nach Anspruch 2, dadurch gekennzeichnet, dass der Verschiebewagen als Übergabevorrichtung (156) eine Ausstossvorrichtung (158) aufweist, die auf der dem Fächergestell (68) gegenüberliegenden Seite des Verschiebewagens (148) annähernd in der Mitte des Verschiebewagens fest angeordnet ist und mit den einzelnen Fächern (66) des Fächerwagens (64) zusammenwirkt.

4. Vorrichtung nach Anspruch 1, dadurch gekennzeichnet, dass die Übergabevorrichtung (82) längs des Verschiebewagens (72) verfahrbar angeordnet ist.

5. Vorrichtung nach Anspruch 4, dadurch gekennzeichnet, dass die Übergabevorrichtung (82) an der dem Fächergestell (68) zugewandten Seite des Verschiebewagens (72) verfahrbar angeordnet ist und eine in den Förderweg der umzusetzenden Glasscheibe (S) einfahrbare Zange (126) zum Erfassen und Herausziehen der Glasscheibe (S) bis zu angetriebenen Rollen (120), sowie einen ausfahrbaren Stössel (130) zum Nachstossen der umgesetzten Glasscheibe (S) in das Fach (84) des Fächergestells (68) aufweist.

6. Vorrichtung nach Anspruch 5, dadurch gekennzeichnet, dass die Zange (126) und der Stössel (130) miteinander verbunden sind und eine gemeinsame Ausfahr- (128, 132) und Antriebsvorrichtung (128, 136) aufweisen.

7. Vorrichtung nach Anspruch 2, dadurch gekennzeichnet, dass mindestens eine der folgenden Baueinheiten, Verschiebewagen (72, 148), Verschiebebrücke (144), Übergabevorrichtung (82, 156) einen mit der Steuervorrichtung verbundenen Impulsgeber (114) aufweist, um die Bewegung der Baueinheiten zu steuern.

8. Vorrichtung nach Anspruch 1, dadurch gekennzeichnet, dass mindestens ein Teil der Baueinheiten (82) als Antriebe Scheibenläufermotore (108) aufweist.

9. Vorrichtung nach Anspruch 1, dadurch gekennzeichnet, dass die Steuervorrichtung mit einem Rechensteuergerät (36) der Glasschneideanlage gekoppelt ist, um die Vorrichtung entsprechend dem Schneidplan der Glasschneideanlage zu steuern.

## Revendications

1. Dispositif pour trier des plaques de verre provenant sans être triées d'une installation de coupe de verre, dispositif comportant un châssis à compartiments (68) muni de compartiments verticaux (66) pour recevoir respectivement une plaque de verre (S) triée, ce dispositif comportant, en outre, un chariot de manœuvre (72, 148) susceptible de se déplacer le long du châssis à compartiments (68) avec un dispositif de transfert (82, 156) pour transférer la plaque de verre, en opérant uniquement dans le plan de cette plaque de verre (S), dans un compartiment (66) du châssis à compartiments (68), ainsi qu'avec un dispositif de commande (143) pour associer chaque plaque de verre (S) à un compartiment déterminé (84) du châssis à compartiments (68), dispositif caractérisé en ce qu'il comporte au moins un chariot à compartiments (64) avec des compartiments verticaux (66) pour recevoir continuellement les plaques de verre non triées (S), ce chariot à compartiments étant susceptible d'être déposé sur le chariot de manœuvre (72, 148), le dispositif de commande étant constitué de façon qu'il associe chaque plaque de verre (S) du chariot à compartiments (64) à un compartiment déterminé (84) du châssis à compartiments (68).

2. Dispositif selon la revendication 1, caractérisé en ce que le chariot de manœuvre (148) comporte un pont de manœuvre (144) pour recevoir le chariot à compartiments (64), ce pont de manœuvre (144) étant susceptible d'être déplacé de la longueur du chariot à compartiments (64) sur le chariot de manœuvre (148).

3. Dispositif selon la revendication 2, caractérisé en ce que le chariot de manœuvre comporte, comme dispositif de transfert (156) un dispositif d'expulsion (158) disposé à poste fixe sur le côté, opposé au châssis à compartiments (68), du chariot de manœuvre (148) à peu près dans le milieu de ce chariot de manœuvre et qui coopère avec les compartiments individuels (66) du chariot à compartiments (64).

4. Dispositif selon la revendication 1, caractérisé en ce que le dispositif de transfert (82) est disposé de façon à pouvoir se déplacer le long du chariot de manœuvre (72).

5. Dispositif selon la revendication 4, caractérisé en ce que le dispositif de transfert (82) est disposé de façon à pouvoir se déplacer sur le côté, tourné vers le châssis à compartiments (68), du chariot de manœuvre (72) et comporte une pince (126) susceptible d'être amenée dans le trajet de déplacement de la plaque de verre (S) à transférer pour saisir et retirer cette plaque de verre (S) jusqu'à des rouleaux entraînés (120), ainsi qu'un poussoir (130) susceptible d'être sorti pour continuer à déplacer la plaque de verre transférée (S) dans le compartiment (84) du châssis à compartiments (68).

6. Dispositif selon la revendication 5, caractérisé en ce que la pince (126) et le poussoir (130) sont reliés ensemble et comportent un dispositif de sortie (128, 132) et d'entraînement (128, 136) commun.

7. Dispositif selon la revendication 2, caractérisé en ce qu'au moins une des unités constitutives suivantes, chariot de manœuvre (72, 148), pont de manœuvre (144), dispositif de transfert (82, 156), comportent un émetteur d'impulsions (114) relié au dispositif de commande pour commander le déplacement de ces unités constitutives.

8. Dispositif selon la revendication 1, caractérisé en ce qu'au moins une partie des unités constitutives (82) comporte comme entraînement des moteurs à rotor plat (108).

9. Dispositif selon la revendication 1, caractérisé en ce que le dispositif de commande est couplé avec un appareil de commande à calculateur (36) de l'installation de coupe de verre, pour commander le dispositif de façon correspondante au plan de coupe de l'installation de coupe de verre.

**Claims**

1. A device for sorting unsorted panes of glass from a glass-cutting installation, having a compartmented rack (68) which has perpendicular compartments (66) for the sorted reception of respective panes of glass (S), furthermore having a displaceable carriage (72, 148), movable along the compartmented rack (68) and having a transfer device (82, 156) for transferring the pane of glass only in the plane of this pane of glass (S) to a compartment of the compartment rack (68), as well as having a control device (143) to assign each pane of glass (S) to a specific compartment (84) of the compartmented rack (68), characterised in that it has at least one compartmented carriage (64), having perpendicular compartments (66) for the continuous reception of the unsorted panes of glass (S), which can be set down on the displaceable carriage (72, 148), the control device being so designed that it assigns each pane of glass (S) from the compartmented carriage (64) to a specific compartment (84) of the compartmented rack (68).

2. A device according to claim 1, characterised in that the displaceable carriage (148) has a movable bridge (144) for the reception of the compartmented carriage (64), the movable bridge (144) being displaceable by the length of the compartmented carriage (64) on the displaceable carriage (148).

3. A device according to claim 2, characterised in that the displaceable carriage has, as transfer device (156), an ejecting device (158) wich is fixedly arranged, on that side of the shifting carriage (148) which lies opposite to the compartmented rack (68), approximately in the centre of the displaceable carriage and cooperates with the individual compartments (66) of the compartmented carriage (64).

4. A device according to claim 1, characterised in that the transfer device (82) is arranged to be displaceable along the displaceable carriage (72).

5. A device according to claim 4, characterised in that the transfer device (82) is arranged to be displaceable on that side of the displaceable carriage (72) which faces the compartmented rack (68), and has a pair of tongs (126), which can be run into the conveying path of the pane of glass (S) that is to be transposed, for grasping and extracting the pane of glass (S) as far as to driven rollers (120), as well as an extensible ram (130) for re-pushing the transposed pane of glass (S) into the compartment (84) of the compartmented rack (68).

6. A device according to claim 5, characterised in that the tongs (126) and the ram (130) are connected to one another and have a common run-out device (128, 132) and drive device (128, 136).

7. A device according to claim 2, characterised in that at least one of the following structural units, displaceable carriage (72, 148) movable bridge (144), transfer device (82, 156), has an impulse transmitter which is connected to the control device in order to control the movement of the structural units.

8. A device according to claim 1, characterised in that at least a part of the structural units (82) has disc rotor motors (108) as drives.

9. A device according to claim 1, characterised in that the control device is coupled to a computer controller (36) of the glass-cutting installation to control the device in accordance with the cutting plan of the glass-cutting installation.

1/6

Fig 2

Fig. 1

Y-Schnitt  Z-Schnitt

S →    ③ 1980  ⑫  ⑫ 1900
       1600    760  760

       ⑥      ⑨
       1520   1580

T →    ⑮ ⑮ ⑮ ⑮
       750 750 750 750

       ⑦      ⑨
       1220   1900

Xo-Schnitt

2515  4025  5925  6005
1205

Fig.3

Fig. 4

Fig.5

5/6

Fig.6

6/6

Fig. 7